# EUROPEAN PATENT APPLICATION

(11) **EP 4 644 152 A1**
(43) Date of publication of application: **05.11.2025**
(21) Application number: 23912102.3
(22) Date of filing: 26.12.2023
(51) Int. Cl.: B60K 1/04, B60K 8/00

(54) **WORK VEHICLE**

(30) Priority: 28.12.2022 JP 2022212144
(71) Applicant: KUBOTA CORPORATION, Osaka-shi, Osaka 556-8601 (JP)
(72) Inventor: SAKANO Tomoyoshi, Sakai-shi, Osaka 590-0908 (JP); IWAMI Kenichi, Sakai-shi, Osaka 590-0908 (JP); TAKAKI Go, Sakai-shi, Osaka 590-0908 (JP); MINAMIDE Yuki, Sakai-shi, Osaka 590-0908 (JP); AMITANI Kodai, Sakai-shi, Osaka 590-0908 (JP); TAKAKI Takahiro, Sakai-shi, Osaka 590-0908 (JP); OHNISHI Teppei, Sakai-shi, Osaka 590-0908 (JP); HAYASHI Yosuke, Sakai-shi, Osaka 590-0908 (JP); KAZAMA Isamu, Sakai-shi, Osaka 590-0908 (JP); MORITA Atsushi, Sakai-shi, Osaka 590-0908 (JP); MATSUI Kenshiro, Sakai-shi, Osaka 590-0908 (JP)
(74) Representative: Cabinet Beau de Loménie
(86) International application number: PCT/JP2023/046554
(87) International publication number: WO 2024/143323

(57) **Abstract**

To facilitate securing an installation space for other equipment in a working vehicle including an electric motor and a battery, by positioning the battery in a special manner.

A working vehicle (1) includes a vehicle body (2), an electric motor (7) in or on the vehicle body, and a battery unit (9) including a battery to store electric power to be supplied to the electric motor. The battery unit is located outward of the vehicle body in a width direction of the vehicle body. It is preferable that the battery unit be located between a front wheel (4A) and a rear wheel (4B) in side view.

## Description

### Technical Field

The present invention relates to working vehicles such as tractors.

### Background Art

In related art, a working vehicle disclosed in PTL 1 below is known. The working vehicle disclosed in PTL 1 is a tractor that includes an electric motor and a battery. The battery is located inside a hood.

### Citation List

### Patent Literature

PTL 1: Japanese Unexamined Patent Application Publication No. 2022-60665

### Summary of Invention

### Technical Problem

In the working vehicle disclosed in PTL 1, since the battery is located inside the hood, it is difficult to secure a wide installation space for other equipment (e.g., a fuel-cell module and the like) inside the hood.

The present invention has been made in view of the above point, and it is an object of the present invention to facilitate securing an installation space for other equipment in a working vehicle including an electric motor and a battery, by positioning the battery in a special manner.

### Solution to Problem

Technical solutions provided by the present invention to solve the above problem are characterized by the following features.

A working vehicle according to an example embodiment of the present invention includes a vehicle body, an electric motor in or on the vehicle body, and a battery unit including a battery to store electric power to be supplied to the electric motor. The battery unit is located outward of the vehicle body in a width direction of the vehicle body.

The working vehicle may further include a traveling device including a front wheel and a rear wheel. The battery unit may be arranged between the front wheel and the rear wheel in side view.

In a vehicle-body width direction, an outer end of the battery unit may be located outward of an outer end of the front wheel and inward of an outer end of the rear wheel.

The working vehicle may further include an operator's seat mounted on the vehicle body, and a cabin provided around the operator's seat. The battery unit may include a lower portion located below the cabin.

The battery unit may include a front portion located in front of the cabin.

The cabin may include a front pillar located forward of the operator's seat, a rear pillar located rearward of the operator's seat, and a roof located higher than the operator's seat. The battery unit may overlap the front pillar in a front-rear direction.

The working vehicle may further include a fender provided above the rear wheel. A lower portion of the battery unit may overlap the fender in a front-rear direction.

A front portion of the battery unit may extend upward along the front pillar and is located in front of the front pillar.

The cabin may include a front glass located in front of the operator's seat. A front portion of the battery unit may overlap the front glass in front view.

The working vehicle may further include a hood to cover an area above the vehicle body in front of the cabin. A front portion of the battery unit may be arranged outward of the hood in a width direction of the hood.

An upper end of the front portion may be located lower than an upper end of the hood.

A step may be provided at one of opposite sides of the cabin in a vehicle-body width direction to receive a foot of an operator when the operator enters or exits the cabin. The battery unit may be located at the other of the opposite sides in the vehicle-body width direction such that the battery unit overlaps the step in side view.

An upper end of the battery unit may be located higher than an upper end of the front wheel and lower than an upper end of the rear wheel.

The working vehicle may further include an operator's seat mounted on the vehicle body. The battery unit may be located lower than an imaginary straight line connecting an upper end of the operator's seat and an upper portion of an outer peripheral surface of the front wheel.

The cabin may include, at a side portion thereof, a door that is openable and closable. The battery unit may be positioned such that the battery unit does not overlap the door in side view and the lower portion overlaps the door in a front-rear direction.

A lower end of the battery unit may be located lower than the vehicle body.

The battery unit may include a battery pack including the battery, an electric circuit, and a housing to house the battery pack and the electric circuit. The battery pack may be arranged at the lower portion.

The working vehicle may further include a fuel-cell module, and a fuel tank to store fuel to be supplied to the fuel-cell module. The battery may be configured to store electric power generated by the fuel-cell module.

### Advantageous Effects of Invention

According to the working vehicle of the present invention, a battery unit is located outward of a vehicle body in a width direction of the vehicle body, and thus, it becomes easier to provide installation space for other equipment (e.g., a fuel-cell module and the like) inside a hood.

### Brief Description of Drawings

[FIG. 1] FIG. 1 is a left side view illustrating an example of a working vehicle according to the present invention.
[FIG. 2] FIG. 2 is a right side view illustrating an example of the working vehicle according to the present invention.
[FIG. 3] FIG. 3 is a plan view illustrating an example of the working vehicle according to the present invention.
[FIG. 4] FIG. 4 is a front view illustrating an example of the working vehicle according to the present invention.
[FIG. 5] FIG. 5 is a block diagram illustrating a basic configuration of the working vehicle.
[FIG. 6] FIG. 6 is a left side view illustrating a configuration of an interior of a battery unit (an interior of a housing).
[FIG. 7] FIG. 7 is a plan view illustrating a vehicle body, a first support, a second support and the like of the working vehicle.
[FIG. 8] FIG. 8 is a left side view illustrating a case where the battery unit is divided into an upper portion and a lower portion.
[FIG. 9] FIG. 9 is a plan view of the working vehicle with the battery unit in a second position.
[FIG. 10] FIG. 10 is a front view of the working vehicle with the battery unit in the second position.
[FIG. 11] FIG. 11 is a perspective view illustrating a configuration of at least one slide rail, which is an example of a moving mechanism.
[FIG. 12] FIG. 12 is a front view illustrating a state in which one of support legs is in a first posture and a state in which the support leg is in a second posture.
[FIG. 13] FIG. 13 is a left side view of the working vehicle with each of the support legs in the second posture.
[FIG. 14] FIG. 14 is an exploded perspective view illustrating a fixing structure of a first support member and a second support member to the vehicle body.
[FIG. 15] FIG. 15 is a plan view illustrating a state in which a first connector and a second connector are engaged with each other (a state in which the battery unit is in the first position) and a state in which the engagement between the first connector and the second connector is released (a state in which the battery unit is in the second position).

### Description of Embodiments

An exemplary embodiment of the present invention will be described below with reference to the drawings. A working vehicle 1 of the present embodiment is a tractor. However, the working vehicle 1 according to the present invention is not limited to a tractor. For example, the working vehicle 1 according to the present invention may be an agricultural machine, a construction machine, a utility vehicle, or the like, other than a tractor. The working vehicle 1 of the present embodiment is a fuel cell vehicle (FCV) to be driven by electric power generated by a fuel cell. However, the working vehicle 1 according to the present invention may be any vehicle to be driven by electric power, and is not limited to a vehicle to be driven by electric power generated by a fuel cell.

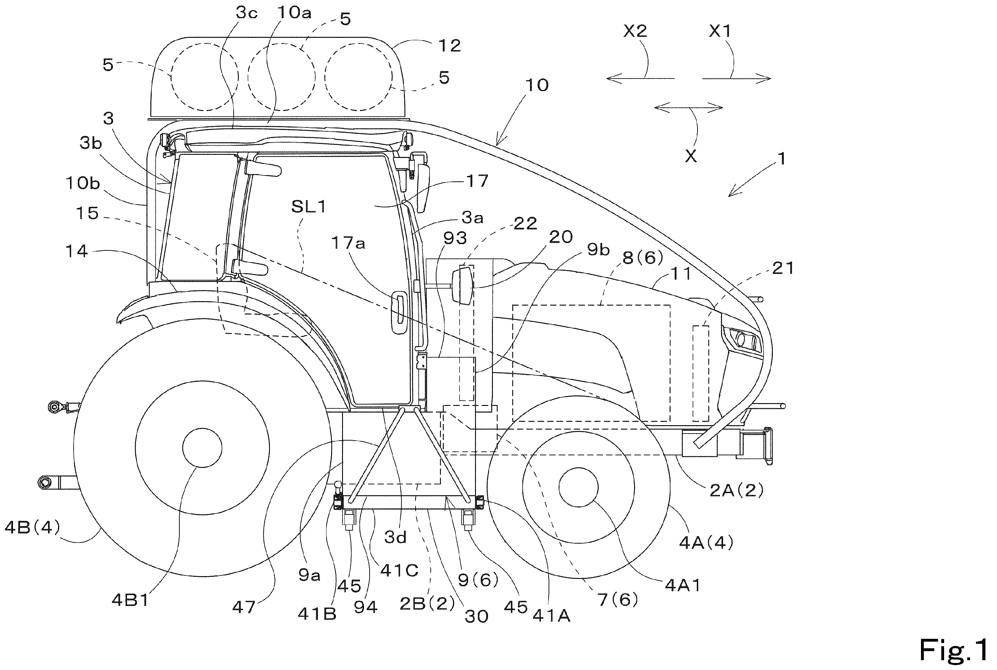

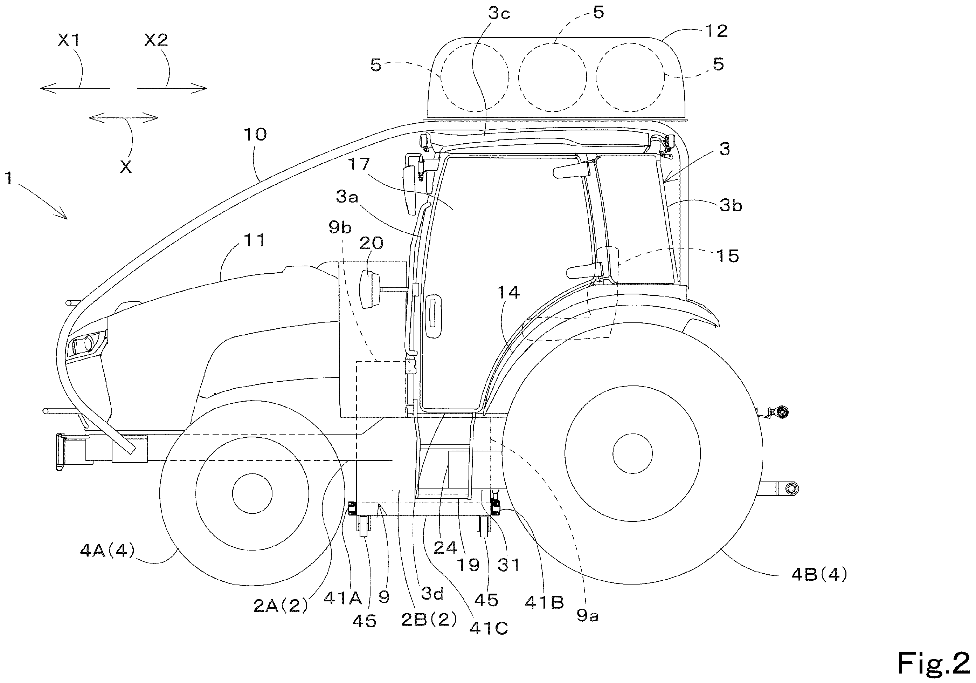

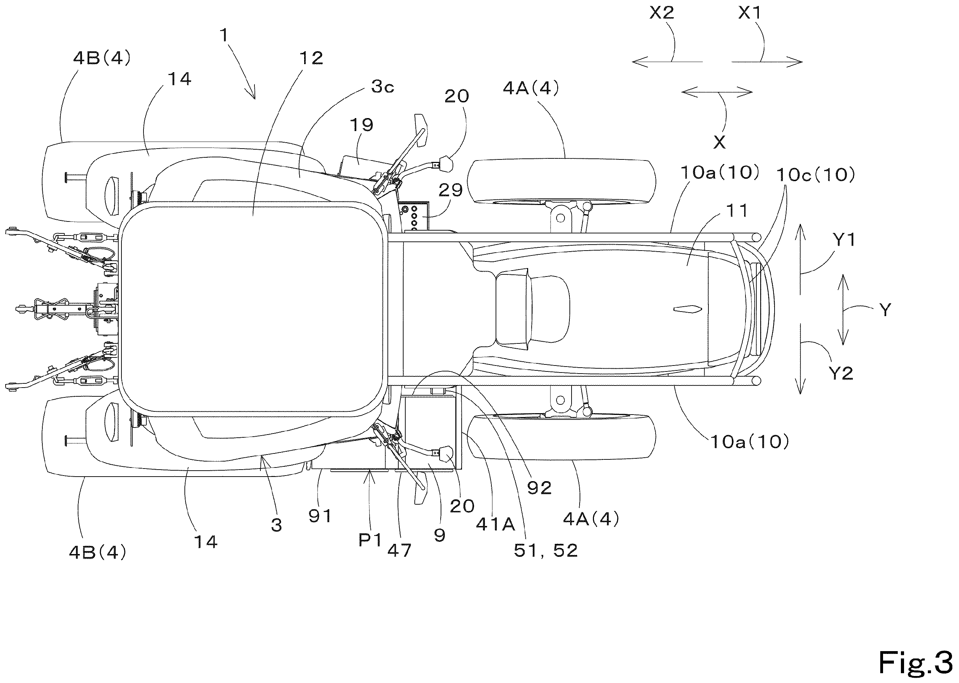

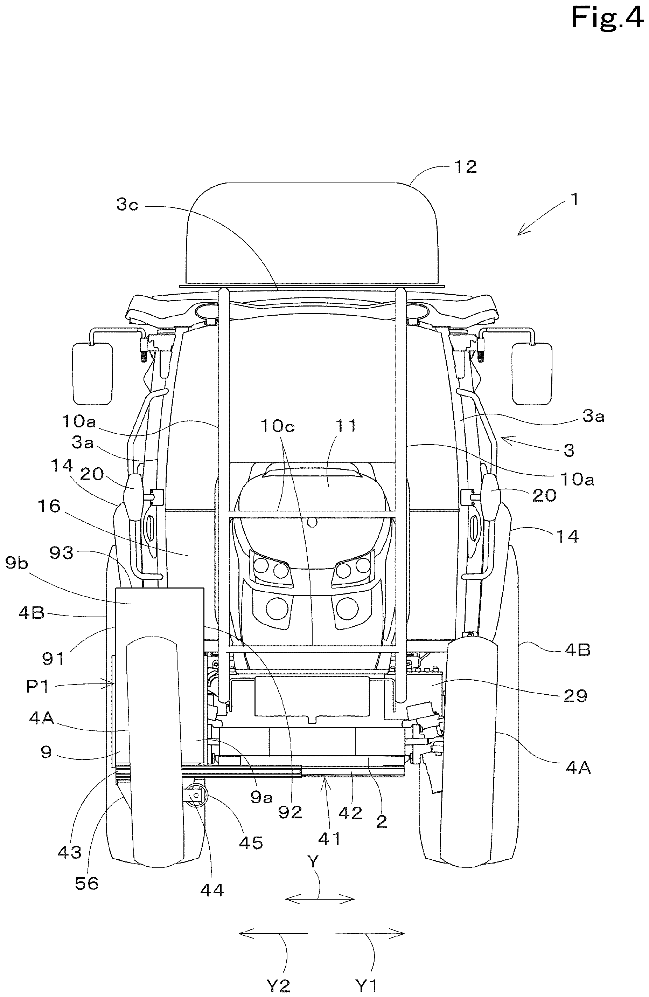

In the following description, a direction in which the working vehicle 1 moves forward (a direction of arrow X1 in FIGS. 1 and 2) will be referred to as forward. A direction in which the working vehicle 1 moves rearward (a direction of arrow X2 in FIGS. 1 and 2) will be referred to as rearward. The left side when the working vehicle 1 faces forward (a direction of arrow Y1 in FIGS. 3 and 4) will be referred to as left (or the left side). The right side when the working vehicle 1 faces forward (a direction of arrow Y2 in FIGS. 3 and 4) will be referred to as right (or the right side). In addition, a direction (a direction of arrow Y in FIGS. 3 and 4) that is horizontally orthogonal to the front-rear direction (a direction of arrow X in FIGS. 1 and 2) will be referred to as a vehicle-body width direction (or the right-left direction).

As illustrated in FIGS. 1 to 4, the working vehicle 1 includes a vehicle body 2, an operator's seat 15 that is mounted on the vehicle body 2, a cabin 3 that is located around the operator's seat 15, a traveling device 4 that supports the vehicle body 2 such that the vehicle body 2 is capable of traveling, at least one fuel tank 5 that stores fuel, and a driving device 6 to be driven by the fuel stored in the at least one fuel tank 5. In the present embodiment, the at least one fuel tank 5 is a hydrogen tank that stores hydrogen gas. The driving device 6 drives the traveling device 4 by using the hydrogen gas stored in the at least one fuel tank 5 as an energy source.

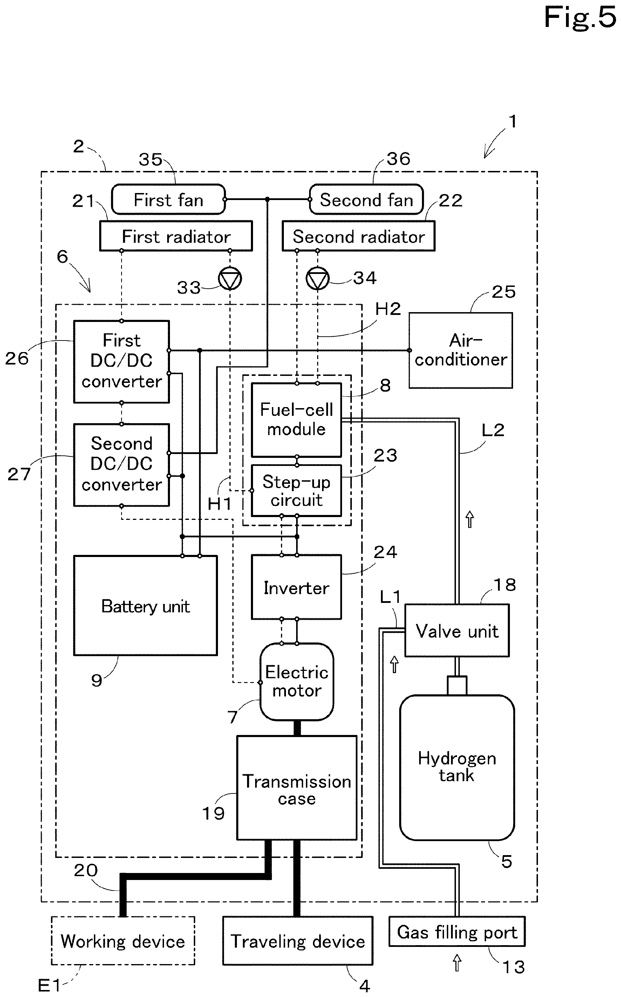

As illustrated in FIG. 1, the driving device 6 includes an electric motor 7, a fuel-cell module 8, and a battery unit 9 (see also FIG. 5). The electric motor 7 drives the traveling device 4. Hydrogen gas is supplied to the fuel-cell module 8 from the at least one fuel tank 5. The fuel-cell module 8 generates electric power by using the hydrogen gas and supplies the electric power to the electric motor 7. The fuel-cell module 8 includes a fuel cell stack. The battery unit 9 stores the electric power supplied from the fuel-cell module 8 (the electric power that is to be supplied to the electric motor 7).

As illustrated in FIGS. 1, 2, 7, and the like, the vehicle body 2 includes a front frame 2A and a transmission case 2B. The front frame 2A is included in a front portion of the vehicle body 2. The transmission case 2B is connected to a rear portion of the front frame 2A and included in a rear portion of the vehicle body 2. The front frame 2A includes metal frame members and/or the like combined together.

The vehicle body 2 supports the cabin 3, the traveling device 4, and the driving device 6. Note that, although the working vehicle 1 of the present embodiment includes the cabin 3, the working vehicle 1 does not necessarily include the cabin 3. For example, the working vehicle 1 may include, instead of the cabin 3, a canopy or a ROPS.

As illustrated in FIGS. 1 to 3 and the like, the vehicle body 2 includes at least one fixing frame 10 for fixing the at least one fuel tank 5 in place. The fuel-cell module 8 is provided at a position toward the front in an upper portion of the vehicle body 2. The fuel-cell module 8 is accommodated in a hood 11. In other words, the fuel-cell module 8 is provided at a position in front of the operator's seat 15 and is covered by a housing (the hood 11) at the front portion of the vehicle.

As illustrated in FIGS. 1 to 4, a tank case 12 that accommodates the at least one fuel tank 5 is provided on an upper frame portion 10a of the at least one fixing frame 10. A rear frame portion 10b of the at least one fixing frame 10 is provided with a gas filling port (a receptacle) 13 (see FIG. 5) to which a gas filling nozzle (not illustrated) of a hydrogen gas supply machine, which is installed outside the vehicle, is connected when the hydrogen gas is injected into the at least one fuel tank 5.

As illustrated in FIG. 1 and the like, the at least one fixing frame 10 is provided at the upper portion of the vehicle body 2. The at least one fixing frame 10 is an elongated tubular member and has an arch shape that curves upward above the vehicle body 2 in such a manner as to extend over the cabin 3 and a hood 11. More specifically, the front end of the at least one fixing frame 10 is connected to the vehicle body 2 at a position in front of and below the hood 11, and the rear end of the at least one fixing frame 10 is connected to the vehicle body 2 at a position behind and below the cabin 3. Note that the at least one fixing frame 10 may have an arch shape that curves, at a position behind the hood 11, upward above the vehicle body 2 in such a manner as to extend over the cabin 3.

As illustrated in FIG. 3, a pair of the fixing frames 10 are arranged in parallel with the hood 11 interposed therebetween such that one is located to the left of the hood 11 and the other is located to the right of the hood 11. The fixing frames 10 support the tank case 12 from below at a position above the cabin 3. In other words, the at least one fuel tank 5 is supported on the vehicle body 2 via the pair of left and right fixing frames 10. The fixing frames 10 have both a function of stably supporting the at least one fuel tank 5 and a function of absorbing vibration of the vehicle body 2 during traveling or an operation so as to reduce impact on the at least one fuel tank 5.

As illustrated in FIG. 3, each of the left and right upper frame portions 10a has a shape extending substantially linearly in the front-rear direction. The tank case 12 is supported by and fixed to the left and right upper frame portions 10a. Each of the left and right rear frame portions 10b has a shape extending substantially linearly in the vertical direction. As illustrated in FIG. 4, a pair of upper and lower connection bars 10c each extending substantially parallel to the lateral direction are provided between the left and right rear frame portions 10b.

The tank case 12 is a box body capable of accommodating a plurality of the fuel tanks 5. The tank case 12 is fixed (rigidly fixed) to the upper frame portions 10a by fixing brackets, bolts and nuts, welding, or the like. The tank case 12 of the present embodiment is made of a steel material having a thickness and properties capable of thermally and physically protecting the at least one fuel tank 5 from external influences. Note that, although the tank case 12 has a box shape that covers the entirety of the at least one fuel tank 5 accommodated therein, it may have a bucket shape that opens upward or a cover shape that opens downward.

As illustrated in FIG. 1 and the like, the cabin 3 is provided at a position toward the rear in the upper portion of the vehicle body 2. The cabin 3 includes at least one front pillar 3a located forward of the operator's seat 15, at least one rear pillar 3b located rearward of the operator's seat 15, and a roof 3c located higher than the operator's seat 15. The front pillars 3a are arranged, with one at the left front of the operator's seat 15, and the other at the right front of the operator's seat 15. The rear pillars 3b are arranged, with one at the left rear of the operator's seat 15, and the other at the right rear of the operator's seat 15. The roof 3c is supported by upper portions of the front pillars 3a and upper portions of the rear pillars 3b. Lower members 3d are each connected to a lower portion of one of the front pillars 3a in such a manner as to extend rearward from the lower portion. Each of the lower members 3d extends from the lower portion of the corresponding front pillar 3a to a lower portion of one of fenders 14. The lower members 3d are included in a lower portion of an entrance of the cabin 3. The upper frame portions 10a of the fixing frames 10 extend in the front-rear direction substantially parallel to an upper surface portion of the roof 3c. The tank case 12 is fixed to the upper frame portions 10a above the roof 3c.

As illustrated in FIG. 4, the cabin 3 includes a front glass 16 provided in front of the operator's seat 15. The front glass 16 is located between the left and right front pillars 3a. As illustrated in FIGS. 1 and 2, at least one door 17 that can be opened and closed is provided on a side portion of the cabin 3. The at least one door 17 is located at a front portion between at least one of the front pillars 3a and at least one of the rear pillars 3b. A plurality of the doors 17 are provided, with one at a left portion of the cabin 3, and the other at a right portion of the cabin 3.

As illustrated in FIGS. 2 and 3, a step 19 is provided on one side (the left) of the cabin 3 in the vehicle-body width direction. The step 19 is a member that receives a foot of an operator when the operator gets on or off the cabin 3. The operator can get on or off the cabin 3 through the left door 17 by using the step 19. An upper end portion of the step 19 is attached to the lower portion of at least one of the front pillars 3a of the cabin 3 and to at least one of the lower members 3d in such a manner as to extend downward below the cabin 3.

As illustrated in FIGS. 1 to 4, the hood 11 is provided in front of the cabin 3. The hood 11 covers an area above the vehicle body 2 in front of the cabin 3. In the working vehicle 1 of the present embodiment, a width (a length in the vehicle-body width direction) of the hood 11 is smaller than a width (a length in the vehicle-body width direction) of the cabin 3. The electric motor 7 and the fuel-cell module 8 are arranged in the hood 11.

As illustrated in FIG. 1, the fuel-cell module 8 is provided above the vehicle body 2. The electric motor 7 is provided behind the fuel-cell module 8. The electric motor 7 is located at a position where it is superposed on or overlaps the vehicle body 2 (the front frame 2A) in a side view. The upper end of the electric motor 7 is located lower than the upper end of the fuel-cell module 8. The lower end of the electric motor 7 is located lower than the lower end of the fuel-cell module 8.

The traveling device 4 includes at least one front wheel 4A and at least one rear wheel 4B. A plurality of the front wheels 4A are provided to the left and right of the front portion of the vehicle body 2, with one to the left and the other to the right. A plurality of the rear wheels 4B are provided to the left and right of the rear portion of the vehicle body 2, with one to the left and the other to the right. As illustrated in FIG. 3, in the working vehicle 1 of the present embodiment, a distance between an outer end (left end) of the left rear wheel 4B and an outer end (right end) of the right rear wheel 4B is greater than a distance between an outer end (left end) of the left front wheel 4A and an outer end (right end) of the right front wheel 4A. The distance between the outer end of the left rear wheel 4B and the outer end of the right rear wheel 4B is a maximum vehicle width of the working vehicle 1.

Each of the fenders 14 is provided above a corresponding one of the rear wheels 4B. Each of the fenders 14 covers an area above the corresponding rear wheel 4B. Each of the fenders 14 is curved along an upper surface of the corresponding rear wheel 4B. Upper edges of the fenders 14 extend along a lower edge of a rear portion (a portion located rearward of the lower members 3d) of the cabin 3.

In the working vehicle 1 of the present embodiment, power is transmitted from the electric motor 7 to one or both of the front wheels 4A and the rear wheels 4B. Note that one or both of the front wheels 4A and the rear wheels 4B, to which the power is transmitted from the electric motor 7 so as to serve as driving wheels, may be crawlers.

The at least one fuel tank 5 is a substantially cylindrical high-pressure container that is made of a hard synthetic resin or the like reinforced with carbon fibers or glass fibers. A single fuel tank 5 or a plurality of the fuel tanks 5 are accommodated in the tank case 12, which is provided at a position above the cabin 3. In the working vehicle 1 of the present embodiment, the three fuel tanks 5 are accommodated in the tank case 12 in such a manner as to be arranged side by side in the front-rear direction. In this manner, in the working vehicle 1 of the present embodiment, the fuel tanks 5 are located above the cabin 3 (the operator's seat 15). Thus, the degree of freedom in arrangement of the electric motor 7, the fuel-cell module 8, and the battery unit 9 with respect to the vehicle body 2 is high. In addition, when performing a design change from an engine-driven vehicle of the related art to a motor-driven vehicle such as the working vehicle 1 of the present embodiment, it is not necessary to significantly change the arrangement of each member.

Note that the number of the fuel tanks 5 mounted is not limited to three. For example, only one fuel tank 5 may be mounted on the working vehicle 1, or two fuel tanks 5 may be mounted, or four or more fuel tanks 5 may be mounted. In addition, the fuel tanks 5 are not limited to being arranged above the cabin 3. For example, the fuel tanks 5 may be arranged at the rear portion of the cabin 3, may be arranged in a space below the operator's seat 15, or may be arranged inside the hood 11.

As illustrated in FIG. 5, the fuel tanks 5 are connected to a gas introduction pipe L1 and a gas discharge pipe L2 via a valve unit 18. The gas introduction pipe L1 is a gas introduction conduit connecting the gas filling port 13 and the valve unit 18 to each other and guides hydrogen gas introduced into the gas filling port 13 from outside the vehicle to the fuel tanks 5. The gas discharge pipe L2 is a gas discharge conduit connecting the fuel-cell module 8 and the valve unit 18 to each other and guides the hydrogen gas stored in the fuel tanks 5 to the fuel-cell module 8. In this manner, the fuel tanks 5 store the hydrogen gas, which is introduced into the gas filling port 13 from outside the vehicle, and supplies the hydrogen gas to the fuel-cell module 8. Note that the valve unit 18 includes an on-off valve, a pressure reducing valve, and the like and discharges the hydrogen gas to the fuel-cell module 8 through the gas discharge pipe L2 after adjusting the flow rate of the hydrogen gas stored in the fuel tanks 5 to a predetermined flow rate.

The electric motor 7 includes a rotor that rotates and a stator that includes a plurality of coils. The electric motor 7 rotationally drives an output shaft with a predetermined torque and rotational speed. As illustrated in FIG. 1, the electric motor 7 is located at a position behind the fuel-cell module 8 and below the operator's seat 15. The output shaft of the electric motor 7 is connected to a power transmission mechanism that is provided inside the transmission case 2B.

Note that a plurality of the electric motors 7 may be mounted on the working vehicle 1. More specifically, for example, the working vehicle 1 includes the electric motor 7 for the front wheels 4A and the other electric motor 7 for the rear wheels 4B. The working vehicle 1 outputs the power of the electric motor 7 for the front wheels 4A to the front wheels 4A, and the power of the electric motor 7 for the rear wheels 4B to the rear wheels 4B. Alternatively, the electric motors 7 are independently provided for each of the four wheels, which includes the front wheels 4A and the rear wheels 4B, and each of these electric motors 7 outputs power to its corresponding front wheel 4A or rear wheel 4B.

The transmission case 2B is connected to a rear portion of the electric motor 7. The transmission case 2B includes power transmission mechanisms such as a transmission, a clutch, and a differential gear incorporated therein. The transmission case 2B decelerates or accelerates power input from the output shaft of the electric motor 7 and outputs the power to the traveling device 4 (the front wheels 4A and/or the rear wheels 4B). In the working vehicle 1 of the present embodiment, only one electric motor 7 is provided at the upper portion of the vehicle body 2, and the power of the electric motor 7 is distributed and output to the left and right rear wheels 4B in the transmission case 2B.

The power transmission mechanisms in the transmission case 2B not only output the power of the electric motor 7 to the traveling device 4 but also output a portion of the power to a PTO shaft (not illustrated) that is provided at the rear portion of the vehicle body 2. The PTO shaft is connected to the transmission case 2B and transmits the power of the electric motor 7 to a working device (implement) E1 (see FIG. 5) that is used by being connected to the working vehicle 1. The working device E1 is, for example, a cultivator, a baler, or the like. In this manner, the working vehicle 1 of the present embodiment can also actuate the working device by using electric power generated by the fuel-cell module 8.

The fuel-cell module 8 includes a substantially rectangular box-shaped battery casing and a plurality of single cells each having two types of electrodes, which are a positive electrode and a negative electrode, and the plurality of single cells are arranged in parallel in a stacked state inside the battery casing. The fuel-cell module 8 generates electric power having a voltage and a current required to drive the electric motor 7 by collecting electric power generated by each of the single cells. The fuel-cell module 8 is connected to radiators 21 and 22 through a refrigerant flow path (not illustrated). By circulating and supplying a cooling liquid for temperature adjustment from the radiators 21 and 22, the temperatures of the above-mentioned electrodes are adjusted to a predetermined temperature. As a result, the fuel-cell module 8 can maintain a high power generation efficiency.

As illustrated in FIG. 5, the fuel-cell module 8 is connected to an inverter 24 via a step-up circuit 23. The step-up circuit 23 boosts the electric power generated by the fuel-cell module 8. The inverter 24 is electrically connected to the electric motor 7. The inverter 24 converts direct-current power input from the step-up circuit 23 into three-phase alternating-current power and outputs it to the electric motor 7. The fuel-cell module 8 drives the electric motor 7 by using the electric power boosted by the step-up circuit 23. Note that the working vehicle 1 has low-voltage electric components each of which operates at a lower voltage than the electric motor 7, and electric power reduced by at least one step-down circuit is supplied to these low-voltage electric components. The working vehicle 1 of the present embodiment includes, as the above-mentioned low-voltage electric components, the battery unit 9, the radiators 21 and 22, and an air-conditioner 25, and includes, as the at least one step-down circuit, a first DC/DC converter 26 and a second DC/DC converter 27.

The first DC/DC converter 26 and the second DC/DC converter 27 are step-down converters each of which converts the voltage of direct-current power input thereto into an even lower voltage. The first DC/DC converter 26 supplies the power reduced in the manner described above to the battery unit 9 and the air-conditioner 25. The second DC/DC converter 27 supplies the power reduced in the manner described above to the radiators 21 and 22. The inverter 24, the first DC/DC converter 26, and the second DC/DC converter 27 are each arranged at a position below the operator's seat 15 in the upper portion of the vehicle body 2.

As illustrated in FIG. 1, the fuel-cell module 8 and the radiators 21 and 22 are accommodated in the hood 11. The radiators 21 and 22 are respectively provided at a position in front of the fuel-cell module 8 and a position behind the fuel-cell module 8 in the upper portion of the vehicle body 2. The radiators 21 and 22 include a first radiator 21 provided at a position in front of the fuel-cell module 8 and a second radiator 22 provided at a position behind the fuel-cell module 8.

As illustrated in FIG. 5, the first radiator 21 and the second radiator 22 are included in a cooling system that cools, by using a cooling liquid (refrigerant), the electric components, such as the fuel-cell module 8, the electric motor 7, the step-up circuit 23, the inverter 24, and the DC/DC converters 26 and 27.

The first radiator 21 cools the cooling liquid supplied thereto through a first cooling passage H1 by heat exchange with the outside air. The second radiator 22 cools the cooling liquid supplied thereto through a second cooling passage H2 by heat exchange with the outside air. The first radiator 21 includes a radiator fan 35 (a first fan 35), and the second radiator 22 includes a radiator fan 36 (a second fan 36). By rotationally driving the radiator fans 35 and 36, the air is caused to circulate the first radiator 21 and the second radiator 22 so as to promote the heat exchange with the above-mentioned cooling liquid.

The first radiator 21 is connected, via the first cooling passage H1, to the electric components (heat-generating components) that require cooling, namely the electric motor 7, the step-up circuit 23, the inverter 24, and the DC/DC converters 26 and 27. The second radiator 22 is connected to the fuel-cell module 8 via the second cooling passage H2.

The first cooling passage H1 includes a first circulation pump 33, and the first circulation pump 33 causes the cooling liquid to circulate between the first radiator 21 and the electric components including the electric motor 7. The second cooling passage H2 includes a second circulation pump 34, and the second circulation pump 34 causes the cooling liquid to circulate between the second radiator 22 and the fuel-cell module 8. In this manner, the second radiator 22 is connected to the cooling passage H2 of the fuel-cell module 8 and cools the cooling liquid circulating between the second radiator 22 and the fuel-cell module 8 by heat exchange so as to adjust the temperature of an internal electrode of the fuel-cell module 8 to a predetermined temperature. As a result, the fuel-cell module 8 can maintain the high power generation efficiency.

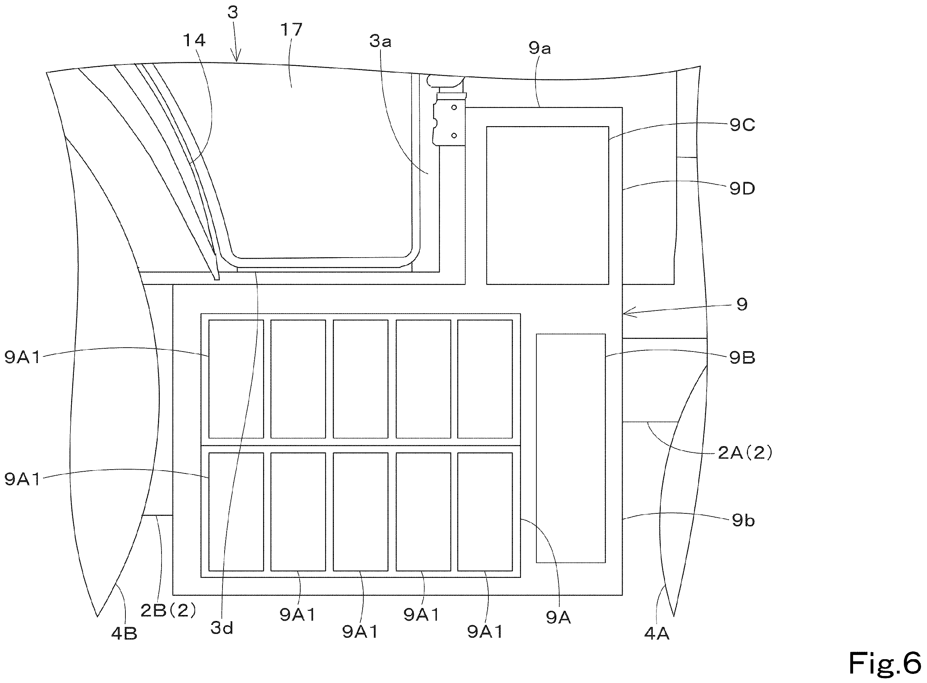

The battery unit 9 stores the electric power to be supplied to the electric motor 7. As illustrated in FIG. 6, the battery unit 9 includes a battery pack 9A, a battery management unit 9B, an electric circuit 9C, and a housing 9D. The battery unit 9 temporarily retains the electric power generated by the fuel-cell module 8 and appropriately outputs the retained electric power to the inverter 24 and the like.

The battery pack 9A includes a plurality of batteries 9A1. The batteries 9A1 included in the battery pack 9A are rechargeable secondary batteries such as lithium-ion batteries, lead-acid batteries, and the like. The batteries 9A1 are capable of accumulating electric power generated by the fuel-cell module 8. The battery management unit 9B is a unit that monitors the state of each of the batteries 9A1. The electric circuit 9C can include various electric circuits such as an ECU, a voltage conversion circuit, and the like. The housing 9D accommodates the battery pack 9A, the battery management unit 9B, and the electric circuit 9C.

The arrangement of the battery unit 9 will be described in detail below.

As illustrated in FIGS. 1 to 4 and FIG. 7, the battery unit 9 is located outward of the vehicle body 2 in the width direction of the vehicle body 2. In other words, the battery unit 9 is not arranged above (e.g., inside the hood 11) or below the vehicle body 2, but is located outward of the vehicle body 2 in the width direction of the vehicle body 2 (i.e., adjacent to the vehicle body 2). Although the battery unit 9 is provided to the right of the vehicle body 2 in the present embodiment, it may be provided to the left of the vehicle body 2.

As illustrated in FIG. 1, in a side view, the battery unit 9 is located between the front wheels 4A and the rear wheels 4B. In other words, the battery unit 9 is located at a position that is located outward of the vehicle body 2 in the width direction of the vehicle body 2 and that is sandwiched between the front wheels 4A and the rear wheels 4B. Consequently, the battery unit 9 can be arranged outside of the vehicle body 2 in the width direction of the vehicle body 2 without expanding the vehicle width of the working vehicle 1.

As illustrated in FIG. 2, in a side view, the battery unit 9 is located at a position where it is superposed on or overlaps the step 19. In other words, the battery unit 9 is located at a position opposite to the step 19 across the vehicle body 2. Since the battery unit 9 is located at the position opposite to the step 19, a wide installation space for the battery unit 9 can be secured without being obstructed by the step 19. In addition, the battery unit 9 does not hinder the operator from getting on or off the cabin 3.

As illustrated in FIG. 1, in a side view, the battery unit 9 is located at a position where it is superposed on or overlaps the electric motor 7. In a side view, the battery unit 9 is located at a position where it is superposed on or overlaps the transmission case 2B. In a side view, the battery unit 9 is located at a position where it is superposed on or overlaps the radiator (the second radiator 22).

As illustrated in FIG. 2, in a side view, the battery unit 9 is located at a position where it is superposed on or overlaps the inverter 24. Consequently, the distance between the battery unit 9 and the inverter 24 becomes shorter, and the length of a wiring line connecting the battery unit 9 and the inverter 24 to each other can be shortened, so that the routing of the wiring line can be facilitated.

As illustrated in FIGS. 1, 2, and 7, the battery unit 9 and the inverter 24 are provided at positions opposite to each other across the vehicle body 2. More specifically, the inverter 24 is provided to one side (the left) in the vehicle-body width direction, and the battery unit 9 is provided to the other side (the right) in the vehicle-body width direction. However, the battery unit 9 may be provided to the left (left side) of the vehicle body 2, and the inverter 24 may be provided to the right (right side) of the vehicle body 2.

As illustrated in FIGS. 3 and 4, an outer end 91 of the battery unit 9 in the vehicle-body width direction is located inward of the outer ends of the rear wheels 4B in the vehicle-body width direction. In the present embodiment, the right end of the battery unit 9 is located to the left of the right ends of the rear wheels 4B. As a result, even when the battery unit 9 is located outward of the vehicle body 2 in the width direction of the vehicle body 2, the maximum vehicle width of the working vehicle 1 does not increase.

In addition, the outer end 91 of the battery unit 9 in the vehicle-body width direction is located outward of the outer ends of the front wheels 4A in the vehicle-body width direction. In the present embodiment, the right end of the battery unit 9 is located to the right of the right ends of the front wheels 4A. By combining this arrangement with the arrangement of the outer end 91 of the battery unit 9, the battery unit 9 can be increased in size outward in the vehicle-body width direction without increasing the maximum vehicle width of the working vehicle 1.

As illustrated in FIGS. 3 and 4, an inner end 92 of the battery unit 9 in the vehicle-body width direction is located inward of the inner ends of the front wheels 4A in the vehicle-body width direction. The width (the length in the vehicle-body width direction) of the battery unit 9 is greater than the width of each of the front wheels 4A. With these configurations, the battery unit 9 can be increased in size inward in the vehicle-body width direction.

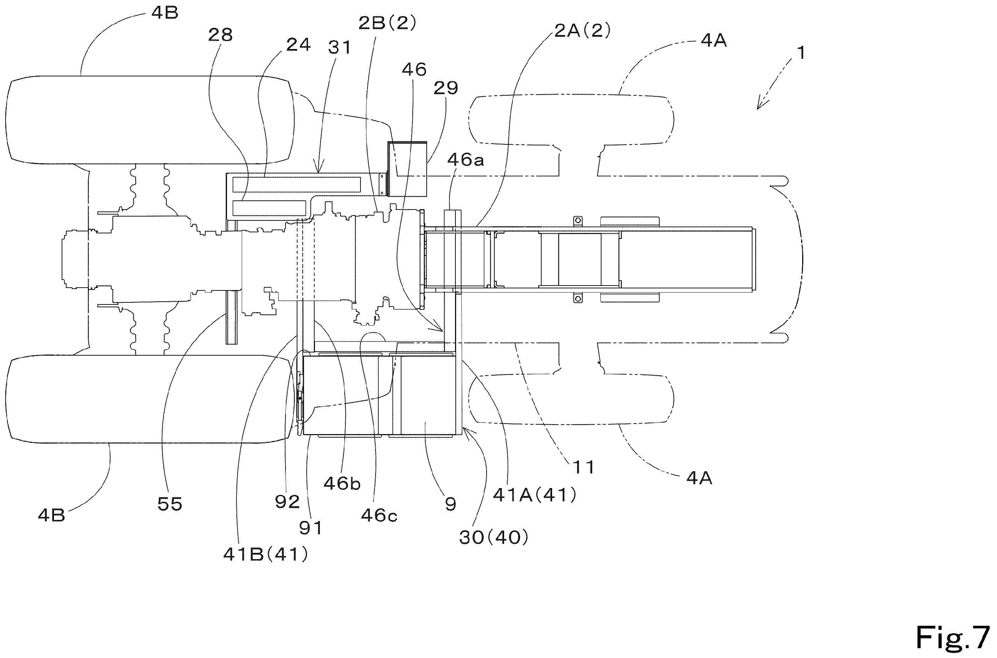

As illustrated in FIG. 7, the inner end 92 of the battery unit 9 in the vehicle-body width direction is located at the same (or approximately the same) position in the vehicle-body width direction as the inner ends of the rear wheels 4B in the vehicle-body width direction. The width (the length in the vehicle-body width direction) of the battery unit 9 is less than the width of each of the rear wheels 4B. Consequently, for example, when traveling with the left and right rear wheels 4B straddling a ridge in an agricultural field, the battery unit 9 is prevented from coming into contact with the ridge.

As illustrated in FIGS. 1 and 4, the upper end 93 of the battery unit 9 is located higher than the upper ends of the front wheels 4A and lower than the upper ends of the rear wheels 4B. In addition, the upper end 93 of the battery unit 9 is located lower than the upper ends of the fenders 14 and higher than the lower ends of the fenders 14. The upper end 93 of the battery unit 9 is located higher than the lower end of the cabin 3 and lower than the upper end of the cabin 3. The upper end 93 of the battery unit 9 is located lower than handles 17a of the doors 17. The upper end 93 of the battery unit 9 is located lower than at least one illumination light 20 that is attached to at least one of the front pillars 3a of the cabin 3.

As illustrated in FIG. 1, the upper end 93 of the battery unit 9 is located lower than the operator's seat 15. In addition, the battery unit 9 is located lower than an imaginary straight line SL1 connecting the upper end of the operator's seat 15 and an upper portion of the outer peripheral surface of at least one of the front wheels 4A (a tangent line of the at least one front wheel 4A). This can avoid obstructing the forward visibility of the operator seated on the operator's seat 15 in the cabin 3.

As illustrated in FIG. 1, the position of the battery unit 9 in the vertical direction overlaps the fuel-cell module 8. In addition, the position of the battery unit 9 in the vertical direction overlaps the electric motor 7. Accordingly, the distance between the battery unit 9 and the fuel-cell module 8, and the distance between the battery unit 9 and the electric motor 7 are reduced, and thus, together with the above-described positional relationship between the battery unit 9 and the inverter 24, the routing of wiring lines among the electric motor 7, the fuel-cell module 8, the battery unit 9, and the inverter 24 can be facilitated.

As illustrated in FIG. 1, the lower end 94 of the battery unit 9 is located lower than the vehicle body 2. The lower end 94 of the battery unit 9 is located lower than an axle 4A1 of the front wheels 4A and an axle 4B 1 of the rear wheels 4B. As a result, a long length of the battery unit 9 in the vertical direction can be secured.

As illustrated in FIGS. 1, 6, and the like, the battery unit 9 includes a lower portion 9a provided below the cabin 3 and a front portion 9b provided in front of the cabin 3. The front portion 9b is a portion that has a rectangular in a side view and that is provided in front of the cabin 3. The lower portion 9a is a portion that has a rectangular in a side view and that is provided below the front portion 9b. In other words, the lower portion 9a is a portion of the battery unit 9 excluding the front portion 9b (including a portion provided below the front portion 9b).

Both the lower portion 9a and the front portion 9b have a rectangular parallelepiped shape. The length of the lower portion 9a in the front-rear direction is greater than the length of the front portion 9b in the front-rear direction. The length of the lower portion 9a in the vertical direction is greater than the length of the front portion 9b in the vertical direction. The width (the length in the vehicle-body width direction) of the lower portion 9a is equal to the width (the length in the vehicle-body width direction) of the front portion 9b. However, the width of the lower portion 9a and the width of the front portion 9b may be different from each other. The front portion 9b is located above the vehicle body 2 and superposed on or overlaps the hood 11 in a side view. The lower portion 9a is superposed on or overlaps the vehicle body 2 (the front frame 2A and the transmission case 2B) in a side view.

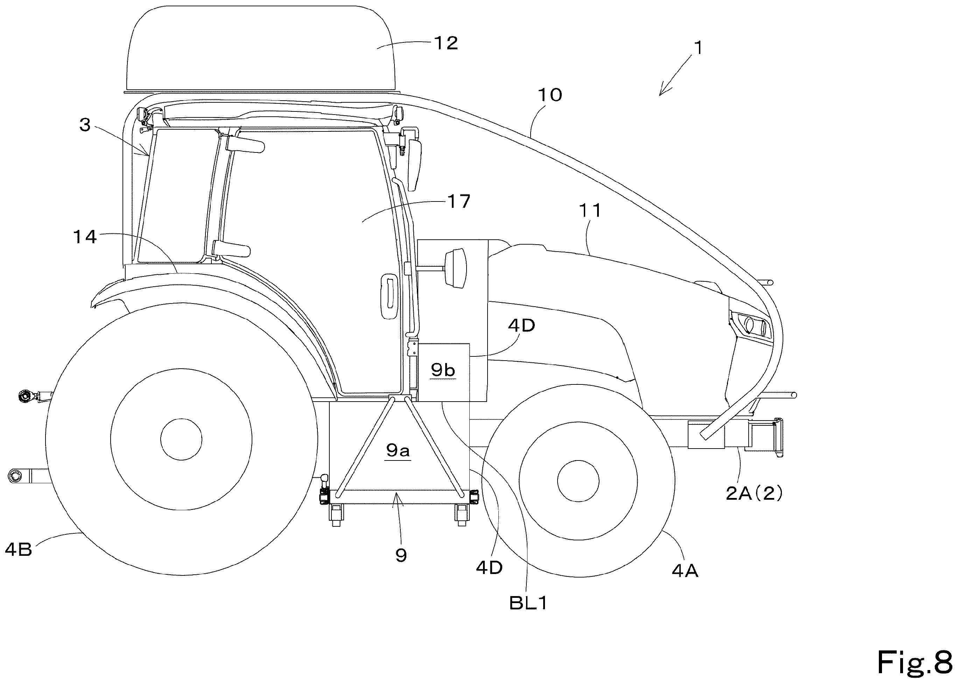

The lower portion 9a and the front portion 9b are integral with each other such that their internal spaces communicate with each other. In other words, the lower portion 9a and the front portion 9b are included in the single housing 9D. The external shape of the battery unit 9 matches the external shape of the housing 9D. Note that the lower portion 9a and the front portion 9b may be included in separate housings 9D, with the lower portion 9a included in one housing 9D and the front portion 9b included in the other (see FIG. 8). In FIG. 8, a boundary line between the two housings 9D (a boundary line between the lower portion 9a and the front portion 9b) is indicated by a line BL1. When the lower portion 9a and the front portion 9b are included in the separate housings 9D, the two housings 9D are connected to each other by using a fastening member or a connecting member such as a pin.

As illustrated in FIG. 1, the battery unit 9 has an L-shape in a side view. In the present embodiment, the battery unit 9 is located to the right of the vehicle body 2, and thus, the battery unit 9 has an L-shape (a laterally reversed L-shape) in a side view as viewed from the interior of the vehicle body 2. When the battery unit 9 is located to the left of the vehicle body 2, the battery unit 9 has an L-shape in a side view as viewed from outside the vehicle body 2.

As illustrated in FIG. 6, the battery pack 9A is located at the lower portion 9a. The battery management unit 9B is located at the lower portion 9a. The electric circuit 9C is located at the front portion 9b. In this manner, in the battery unit 9, the battery pack 9A, which is a heavy component, is located at the lower portion 9a, and the electric circuit 9C, which is a component lighter than the battery pack 9A, is located at the front portion 9b. Thus, the position of the center of gravity of the working vehicle 1 can be lowered.

In the present embodiment, the battery unit 9 includes both the lower portion 9a and the front portion 9b. However, the battery unit 9 may include only one of the lower portion 9a and the front portion 9b. In this case, the battery unit 9 can have a rectangular shape in a side view.

As illustrated in FIG. 1, the position of the battery unit 9 overlaps the cabin 3 in the front-rear direction. More specifically, the position of the battery unit 9 in the front-rear direction overlaps the front pillars 3a and the lower members 3d. In addition, the position of the lower portion 9a of the battery unit 9 in the front-rear direction overlaps the fenders 14. The battery unit 9 is located in such a manner as to extend from below the front pillars 3a to below the fender 14. In addition, the position of the battery unit 9 in the front-rear direction overlaps the at least one illumination light 20. Furthermore, the position of the battery unit 9 in the front-rear direction overlaps the tank case 12.

As illustrated in FIGS. 1 and 4, the front portion 9b of the battery unit 9 is provided in front of the front pillars 3a. The front portion 9b extends upward along the front pillars 3a in front of the front pillars 3a. The lower portion 9a of the battery unit 9 extends in the front-rear direction along the lower members 3d below the lower members 3d. The battery unit 9 is located at a position where it is not superposed on or overlaps the doors 17 in a side view. Thus, the battery unit 9 does not obstruct the opening and closing of the doors 17. The position of the lower portion 9a of the battery unit 9 in the front-rear direction overlaps the doors 17.

As illustrated in FIG. 4, the front portion 9b of the battery unit 9 is superposed on or overlaps the front glass 16 in a front view. In other words, a portion of the front portion 9b is located in front of the front glass 16. In addition, the front portion 9b is located outward of the hood 11 in the width direction of the hood 11. The upper end of the front portion 9b (the upper end 93 of the battery unit 9) is located lower than the upper end of the hood 11.

As illustrated in FIG. 3, the battery unit 9 is located at a position where it is superposed on or overlaps the cabin 3 in a plan view. The battery unit 9 is located at a position where it is superposed on or overlaps the tank case 12 in a plan view. The battery unit 9 is located at a position where it is superposed on or overlaps the fender 14 in a plan view. The battery unit 9 is located at a position where it is superposed on or overlaps the at least one illumination light 20 in a plan view.

As illustrated in FIGS. 1 and 7, the battery unit 9 is supported by a first support 30. The first support 30 is fixed to the vehicle body 2 (specifically, a lower portion of the vehicle body 2). The inverter 24 is supported by a second support 31. The second support 31 is also fixed to the vehicle body 2 (specifically, the lower portion of the vehicle body 2). In other words, both the battery unit 9 and the inverter 24 are fixed in place by the supports (the first support 30 and the second support 31), which are fixed to the vehicle body 2. In the present embodiment, the first support 30 and the second support 31 are separate members. However, they may be integrated as a single common member. The second support 31 supports, in addition to the inverter 24, a capacitor 28 and a storage battery 29. The capacitor 28 is provided between the inverter 24 and the vehicle body 2. The storage battery 29 is provided in front of the inverter 24. The storage battery 29 supplies electric power to various equipment mounted on the vehicle body 2 (excluding the electric motor 7).

The first support 30 supports the battery unit 9 such that the battery unit 9 is held above the ground. Although the first support 30 may be configured to support the battery unit 9 such that the battery unit 9 is immovable with respect to the vehicle body 2, it is preferable that the first support 30 be configured to support the battery unit 9 such that the battery unit 9 is movable with respect to the vehicle body 2. In the present embodiment, the first support 30 is configured to support the battery unit 9 such that the battery unit 9 is movable with respect to the vehicle body 2. The first support 30 that supports the battery unit 9 such that the battery unit 9 is movable with respect to the vehicle body 2 will hereinafter be referred to as a moving mechanism 40.

The moving mechanism 40 enables the battery unit 9 to move from a first position to a second position that is located outward of the first position in the vehicle-body width direction. In other words, the moving mechanism 40 enables the battery unit 9 to move sideways away from the vehicle body 2. In the present embodiment, since the battery unit 9 is located to the right of the vehicle body 2, the moving mechanism 40 enables the battery unit 9 to move rightward. In the case where the battery unit 9 is located to the left of the vehicle body 2, the moving mechanism 40 enables the battery unit 9 to move leftward.

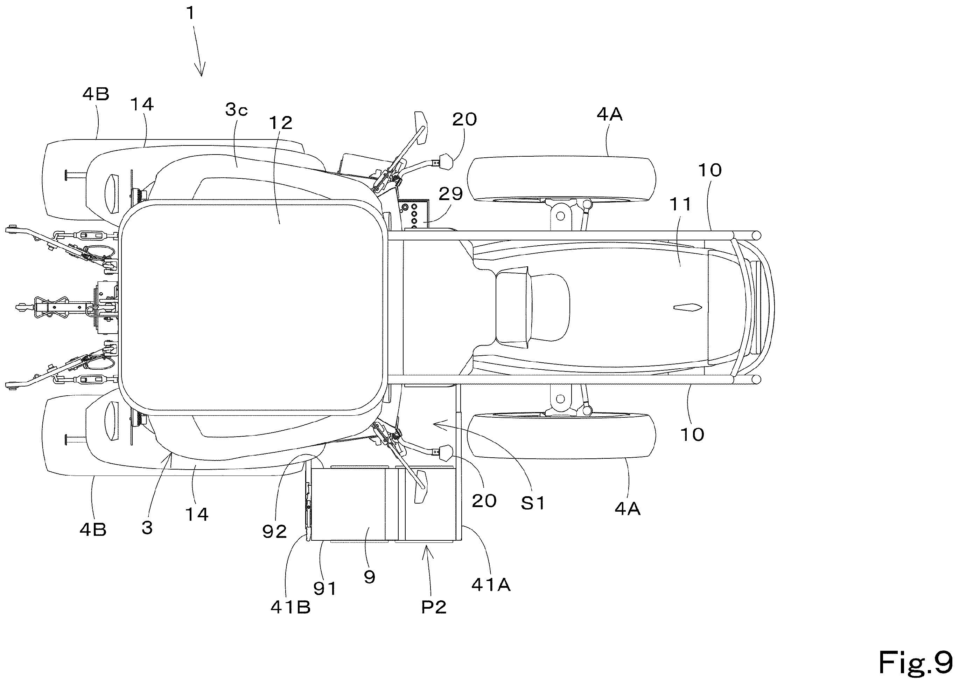

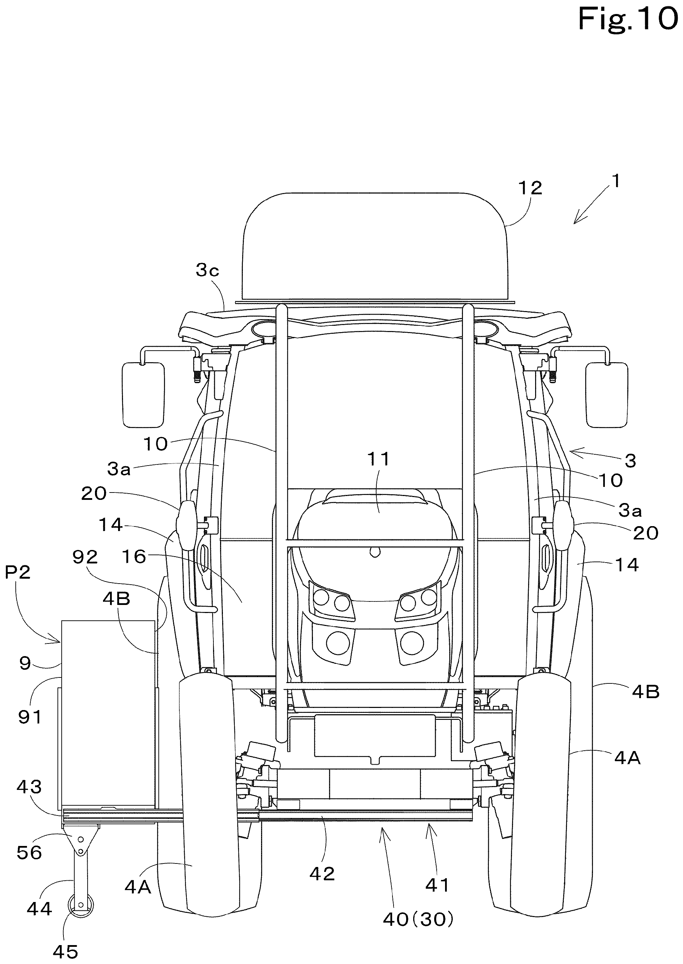

FIGS. 3 and 4 illustrate a state in which the battery unit 9 is in a first position P1. When the battery unit 9 is in the first position P1, the outer end 91 of the battery unit 9 in the vehicle-body width direction is located inward of the outer ends of the rear wheels 4B. FIGS. 9 and 10 illustrate a state in which the battery unit 9 is in a second position P2. When the battery unit 9 is in the second position P2, the outer end 91 of the battery unit 9 in the vehicle-body width direction is located outward of the outer ends of the rear wheels 4B.

Preferably, when the battery unit 9 is in the second position P2, the inner end of the battery unit 9 in the vehicle-body width direction is located outward of the outer ends of the rear wheels 4B (see FIGS. 9 and 10). In other words, when the battery unit 9 is in the second position P2, although it is only necessary that at least a portion of the battery unit 9 be located outward of the outer ends of the rear wheels 4B in the vehicle-body width direction, it is preferable that the entire battery unit 9 be located outward of the outer ends of the rear wheels 4B in the vehicle-body width direction.

When the battery unit 9 is in the second position P2 and the entire battery unit 9 is located outward of the outer ends of the rear wheels 4B in the vehicle-body width direction, a wide space is defined between the battery unit 9 and the vehicle body 2, and thus, replacement of the battery unit 9 (replacement of the battery pack 9A and the like) can be facilitated.

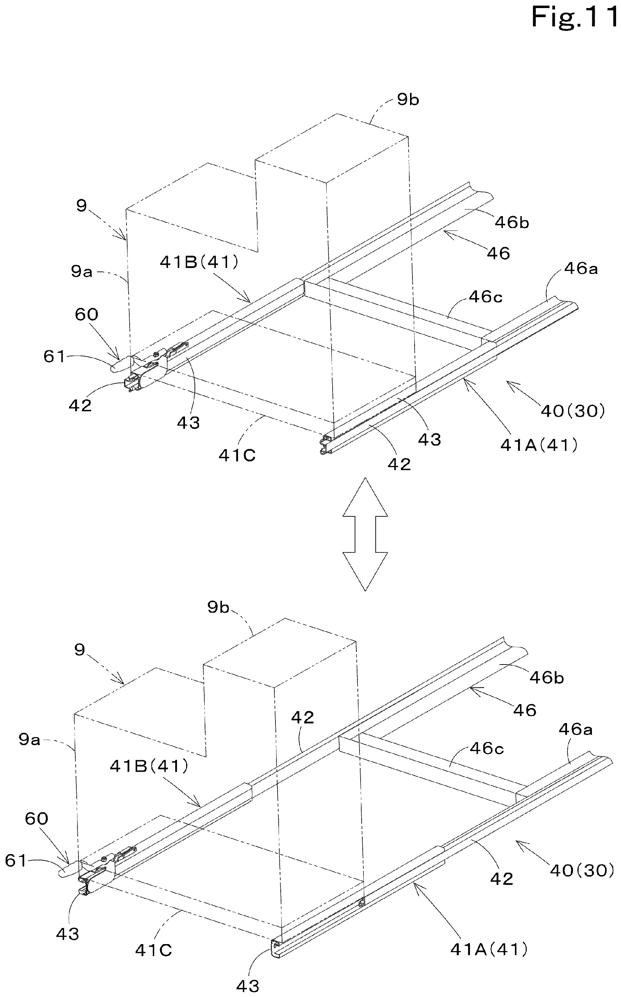

As illustrated in FIG. 11, in the present embodiment, the moving mechanism 40 includes at least one slide rail 41. Since the moving mechanism 40 includes the at least one slide rail 41, a moving direction of the battery unit 9 can be accurately determined. Thus, the battery unit 9 can be reliably moved outward in the vehicle-body width direction (from the first position P1 toward the second position P2). Note that the moving mechanism 40 is not limited to the at least one slide rail 41.

The at least one slide rail 41 is made of a rigid material such as a metal. The at least one slide rail 41 includes a first member 42 and a second member 43. The first member 42 is fixed to the vehicle body 2. The first member 42 extends outward in the vehicle-body width direction from the vehicle body 2. The second member 43 is movable (slidable) in the vehicle-body width direction along the first member 42.

As illustrated in FIGS. 1 and 11 and the like, the at least one slide rail 41 includes a front rail 41A and a rear rail 41B that are arranged in parallel with a gap therebetween in the front-rear direction. The front rail 41A supports a front portion of the battery unit 9. The rear rail 41B supports a rear portion of the battery unit 9. The front rail 41A and the rear rail 41B are connected to each other by a base plate 41C. The base plate 41C is fixed to the second members 43. The battery unit 9 is placed on the upper surface of the base plate 41C.

As illustrated in FIG. 7, the slide rails 41 are fixed to the vehicle body 2. More specifically, the slide rails 41 are fixed to the vehicle body 2 via a first support member 46, which will be described later. The front rail 41A is fixed to the front frame 2A. The rear rail 41B is fixed to the transmission case 2B.

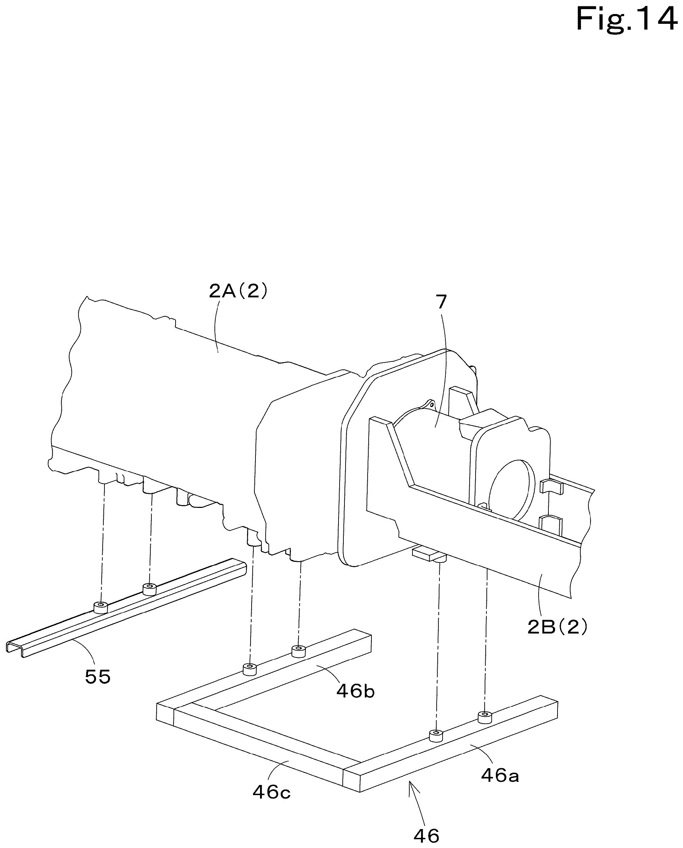

As illustrated in FIGS. 7 and 14, the first support member 46 that supports the slide rails 41 is fixed to the vehicle body 2. The first support member 46 includes a first portion 46a extending in the vehicle-body width direction along the front rail 41A, a second portion 46b extending in the vehicle-body width direction along the rear rail 41B, and a third portion 46c connecting tip ends (outer ends) of the first and second portions 46a and 46b to each other. The first portion 46a is fixed to the front frame 2A. The second portion 46b is fixed to the transmission case 2B. The first members 42 of the slide rails 41 are attached to the first support member 46.

As illustrated in FIG. 7, the second support 31 is fixed to the transmission case 2B by a second support member 55. The second support 31 extends outward in the width direction of the vehicle-body 2 from the transmission case 2B. As illustrated in FIG. 14, the second support member 55 is fixed to a lower portion of the transmission case 2B.

The battery unit 9 can move to the first position P1 and to the second position P2 as a result of the second members 43 and the base plate 41C moving with respect to the first members 42. When the slide rails 41 are in their shortest state (when the amount of projection of each of the second members 43 with respect to the corresponding first member 42 is at maximum), the battery unit 9 is in the first position P1 (see the upper diagram in FIG. 11). When the slide rails 41 are in their longest state (when the amount of projection of each of the second members 43 with respect to the corresponding first member 42 is at minimum), the battery unit 9 is in the second position P2 (see the lower diagram in FIG. 11).

As illustrated in FIG. 1, a fixture 47 for fixing the battery unit 9 onto the base plate 41C is attached to the base plate 41C. The fixture 47 is a string-shaped member and is stretched from a left portion of the base plate 41C to a right portion of the base plate 41C so as to press the battery unit 9 from above.

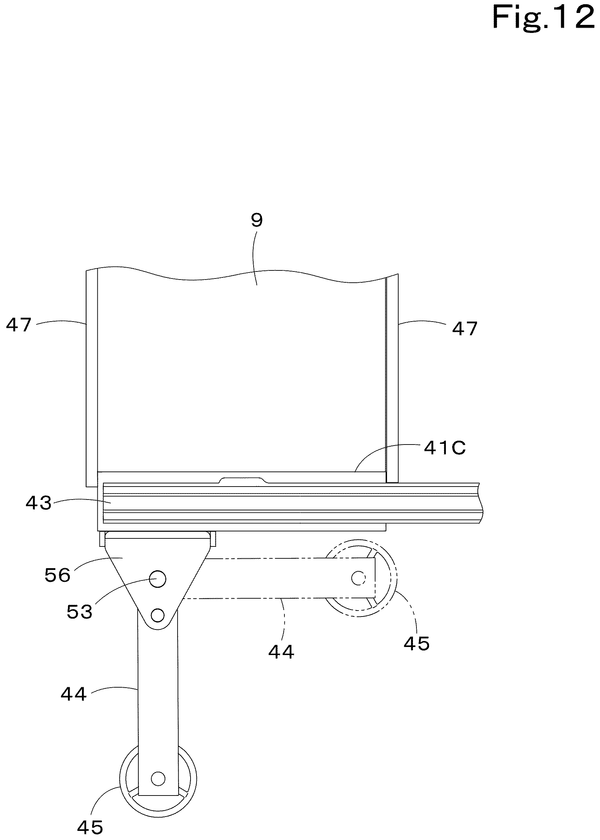

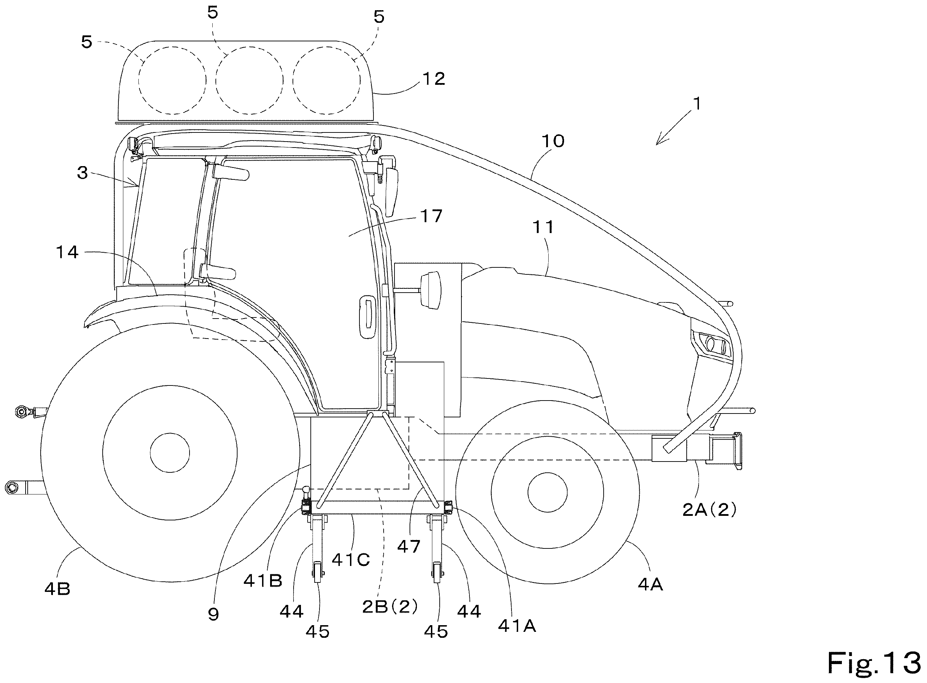

As illustrated in FIGS. 4 and 10, at least one of the second members 43 of the slide rails 41 is provided with at least one support leg 44 that supports the at least one second member 43 on the ground. The at least one support leg 44 is attached to the second member 43 via a bracket 56. The bracket 56 includes a support shaft 53 (see FIG. 12) that supports the at least one support leg 44 such that the at least one support leg 44 is rotatable. As illustrated in FIG. 12, the at least one support leg 44 can rotate while the support shaft 53 serves as a fulcrum. Consequently, the at least one support leg 44 can change its posture to a first posture in which it extends in a direction along the second member 43 so as not to be in contact with the ground (see an imaginary line in FIG. 4 and FIG. 12, and see FIG. 1) and to a second posture in which it extends downward from the second member 43 so as to be in contact with the ground (see the solid lines in FIG. 10 and FIG. 12, and see FIG. 13). In the first posture, the at least one support leg 44 extends in the vehicle-body width direction parallel (or approximately parallel) to the second member 43.

The at least one support leg 44 can be in the first posture when the battery unit 9 is in the first position P1, and can be in the second posture when the battery unit 9 is in the second position P2. Thus, when the battery unit 9 is in the second position P2, the slide rails 41 can be prevented from being in a cantilevered state. Therefore, the slide rails 41 can be prevented from bending downward or deforming due to the weight of the battery unit 9. When the battery unit 9 is located at a position between the first position P1 and the second position P2, the at least one support leg 44 may be in the first posture or may be in the second posture.

As illustrated in FIG. 11, the slide rails 41 includes a holding mechanism 60 that holds the posture of the at least one support leg 44. The holding mechanism 60 is configured such that its state can be switched, by swinging a lever 61, between a first state in which the posture of the at least one support leg 44 is held in the first posture and a second state in which the posture of the at least one support leg 44 is held in the second posture. Although the specific configuration of the holding mechanism 60 is not particularly limited, for example, a holding member that moves in conjunction with the swinging of the lever 61 may be provided, and this holding member may be configured to come into contact with the at least one support leg 44, which is in the first posture when the holding mechanism 60 is in the first state, and hold the at least one support leg 44 in the first posture and may be configured to come into contact with the at least one support leg 44, which is in the second posture when the holding mechanism 60 is in the second state, and hold the at least one support leg 44 in the second posture.

As illustrated in FIGS. 10, 12, 13, and the like, it is preferable that the at least one support leg 44 include a wheel 45 that is in contact with the ground when the at least one support leg 44 is in the second posture. By setting the at least one support leg 44 in the second posture such that the wheel 45 is in contact with the ground when the second members 43 are moved with respect to their respective first members 42 in the vehicle-body width direction, it becomes possible to easily and smoothly move the second members 43 with respect to their respective first members 42 with a small force.

Since only the vehicle-body width direction is the moving direction of the battery unit 9, the orientation of the wheel 45 may be fixed. However, the orientation of the wheel 45 may be variable to house irregularities and the like on the ground. In the case where the orientation of the wheel 45 is variable, for example, the wheel 45 may be in the form of a caster that includes a wheel rotatable about a vertical axis.

In the case where the at least one support leg 44 includes the wheel 45, it is preferable that the at least one support leg 44 be capable of changing its posture from the first posture to the second posture when the battery unit 9 is in the first position P1 or is located at a position between the first position P1 and the second position P2. In this configuration, an operation of moving the battery unit 9 outward in the vehicle-body width direction (pulling the second members 43 out from their respective first members 42) can be performed easily and smoothly due to the rolling of the grounded wheel 45.

Note that the at least one support leg 44 may be extendable and retractable instead of being capable of changing its posture. In this case, the at least one support leg 44 can be brought into contact with the ground by extending the at least one support leg 44. In addition, the at least one support leg 44 can be brought into a state of not being in contact with the ground by retracting the at least one support leg 44.

In the present embodiment, the front rail 41A and the rear rail 41B are each provided with one support leg 44. In other words, each of the slide rails 41 is provided with one support leg 44. However, each of the slide rails 41 may be provided with two or more support legs 44. For example, each of the slide rails 41 may be provided with two or more support legs 44 such that the two or more support legs 44 are arranged along the length direction of the slide rail 41 in such a manner as to be spaced apart from each other.

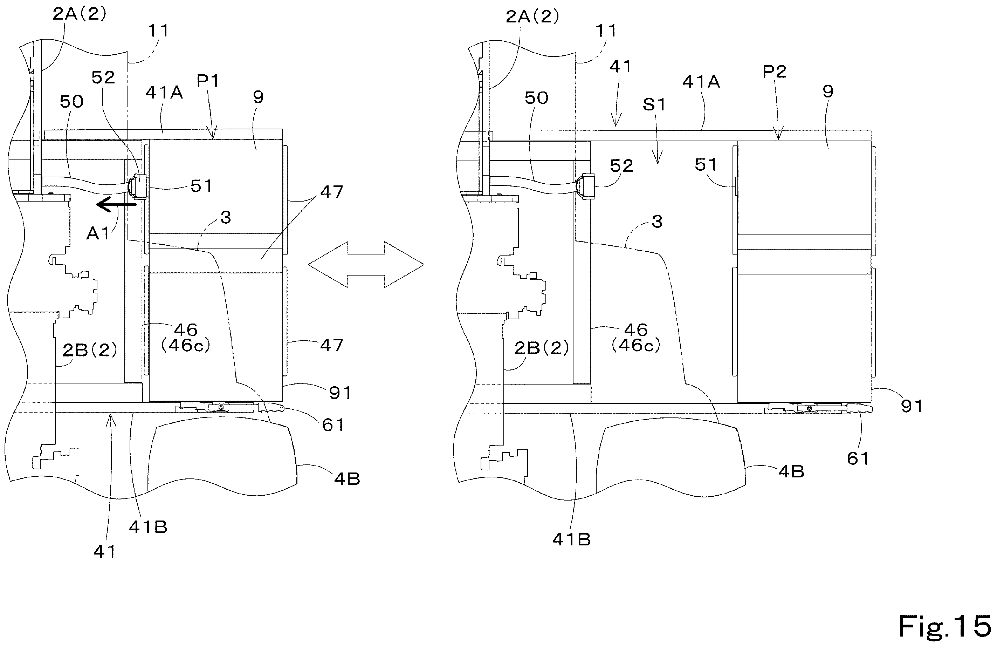

As illustrated in FIG. 3 and the left diagram in FIG. 15, when the battery unit 9 is in the first position P1, there is almost no space between the vehicle body 2 and the battery unit 9 (e.g., between the hood 11 and the battery unit 9). In contrast, as illustrated in FIG. 9 and the right diagram in FIG. 15, when the battery unit 9 is in the second position P2, a space S1 is defined between the vehicle body 2 and the battery unit 9. In other words, by moving the battery unit 9 from the first position P1 to the second position P2, the space S1, which is relatively wide, is defined between the vehicle body 2 and the battery unit 9 (in particular, between the hood 11 and the battery unit 9). A length of the space S1 in the vehicle-body width direction (i.e., a length of a gap defined between the vehicle body 2 and the battery unit 9) is sufficient for at least one operator to enter. Consequently, in the space S1, the operator can stand on at least one of the slide rails 41 (e.g., the front rail 41A). Thus, each of the slide rails 41 can be used as a scaffold for performing an operation on the vehicle body 2 (e.g., loading and unloading of the fuel tanks 5 and the like). Therefore, the operator can perform such an operation on the vehicle body 2 without being obstructed by the battery unit 9.

As illustrated in FIG. 15, the working vehicle 1 includes a cable 50 that connects the battery unit 9 and the inverter 24 to each other. The cable 50 electrically connects the battery unit 9 and the inverter 24 to each other. The battery unit 9 includes a first connector 51 to and from which the cable 50 is attachable and detachable. The first connector 51 is provided at a position on any one of the front of the battery unit 9, the top of the battery unit 9, or the inside of the battery unit 9 in the vehicle-body width direction. A second connector 52 that is connectable to the first connector 51 is provided at a tip end of the cable 50.

In the present embodiment, the first connector 51 is located inside the battery unit 9 in the vehicle-body width direction. The cable 50 extends outward in the vehicle-body width direction from the vehicle body 2. When the battery unit 9 is in the second position P2 (see the right diagram in FIG. 15), the battery unit 9 moves away from the vehicle body 2, so that the operator can easily access the first connector 51. Therefore, when the battery unit 9 is at least in the second position P2, the cable 50 can be detached from the connector 51.

The cable 50 may be detached from the first connector 51 when the battery unit 9 is in the first position P1 or in the second position P2. FIG. 15 illustrates a state in which, when the battery unit 9 is in the first position P1 (see the left diagram), the engagement between the first connector 51 and the second connector 52 is released (see arrow A1) such that the cable 50 is detached from the first connector 51.

For example, when the second connector 52 (the cable 50) is fixed immovably to the first support member 46, by detaching the cable 50 (the second connector 52) from the first connector 51 when the battery unit 9 is in the first position P1, the battery unit 9 can be moved to the second position P2.

In the case where the second connector 52 (the cable 50) is extendable in the vehicle-body width direction from the first support member 46 and where the second connector 52 (the cable 50) is in an extended state, if an end of the second connector 52 does not reach the second position P2, that is, if the cable 50 is short (cannot be extended to the second position P2), the battery unit 9 can be moved to the second position P2 by detaching the cable 50 (the second connector 52) from the first connector 51 while the battery unit 9 is in the first position P1.

In the case where the second connector 52 (the cable 50) is extendable in the vehicle-body width direction from the first support member 46 and where the second connector 52 (the cable 50) is in an extended state, if the end of the second connector 52 can reach the second position P2 or if the end of the second connector 52 can be positioned outward of the second position P2 in the vehicle-body width direction, that is, if the cable 50 is long (can be extended to the second position P2), the battery unit 9 can be moved to the second position P2 with the second connector 52 remaining connected to the first connector 51. In a state where the battery unit 9 has reached the second position P2 or the vicinity of the second position P2, the cable 50 can be easily detached from the first connector 51 by detaching the cable 50 (the second connector 52) from the first connector 51.

Example embodiments of the present invention provide working vehicles 1 described in the following items.

(Item A1) A working vehicle 1 including a vehicle body 2, an electric motor 7 in or on the vehicle body 2, and a battery unit 9 including a battery to store electric power to be supplied to the electric motor 7, wherein the battery unit 9 is located outward of the vehicle body 2 in a width direction of the vehicle body 2.

With the working vehicle 1 according to Item A1, since the battery unit 9 is located outward of the vehicle body 2 in the width direction of the vehicle body 2, it is easier to provide installation space for other equipment (e.g., a fuel-cell module 8 and the like) inside the vehicle body 2 in the width direction (e.g., inside a hood 11).

(Item A2) The working vehicle 1 according to Item A1, further including a traveling device 4 including a front wheel 4A and a rear wheel 4B, wherein the battery unit 9 is located between the front wheel 4A and the rear wheel 4B in side view.

With the working vehicle 1 according to Item A2, a space that is defined outside the vehicle body 2 in the width direction and between the front wheel 4A and the rear wheel 4B (a space that has been occupied by a fuel tank and the like in an engine-driven working vehicle of the related art) can be effectively used to position the battery unit 9. More specifically, the front wheel 4A and the rear wheel 4B project outward from the vehicle body 2 (outward in the width direction), and thus, a space is defined outside the vehicle body 2 in the width direction and between the front wheel 4A and the rear wheel 4B, so that the battery unit 9 can be arranged by using this space.

(Item A3) The working vehicle 1 according to Item A2, wherein, in a vehicle-body width direction, an outer end of the battery unit 9 is located outward of an outer end of the front wheel 4A and inward of an outer end of the rear wheel 4B.

With the working vehicle 1 according to Item A3, the battery unit 9 can be positioned without increasing the vehicle width of the working vehicle 1 while keeping the width of the battery unit 9 as large as possible.

(Item A4) The working vehicle 1 according to any one of Items A1 to A3, further including an operator's seat 15 mounted on the vehicle body 2, and a cabin 3 provided around the operator's seat 15, wherein the battery unit 9 includes a lower portion 9a located below the cabin 3.

With the working vehicle 1 according to Item A4, a space defined below the cabin 3 can be effectively utilized to position the lower portion 9a of the battery unit 9. In addition, since the lower portion 9a that is a portion or the whole of the battery unit 9, which is a heavy component, is located below the cabin 3, the position of the center of gravity of the working vehicle 1 can be lowered, and the stability of the working vehicle 1 during traveling can be improved.

(Item A5) The working vehicle 1 according to Item A4, wherein the battery unit 9 includes a front portion 9b located in front of the cabin 3.

With the working vehicle 1 according to Item A5, a space defined in front of the cabin 3 can be effectively used to position the front portion 9b of the battery unit 9.

(Item A6) The working vehicle 1 according to Item A4 or A5, wherein the cabin 3 includes a front pillar 3a located forward of the operator's seat 15, a rear pillar 3b located rearward of the operator's seat 15, and a roof 3c located higher than the operator's seat 15, and the lower portion 9a of the battery unit 9 overlaps the front pillar 3a in a front-rear direction.

With the working vehicle 1 according to Item A6, since the lower portion 9a of the battery unit 9 is located below the front pillar 3a that is a member having high rigidity, at least a portion of an area above the lower portion 9a can be protected by the front pillar 3a of the cabin 3.

(Item A7) The working vehicle 1 according to any one of Items A4 to A6, further including a fender 14 provided above the rear wheel 4B, wherein a lower portion 9a of the battery unit 9 overlaps the fender 14 in a front-rear direction.

With the working vehicle 1 according to Item A7, at least a portion of an area above the lower portion 9a of the battery unit 9 can be protected by the fender 14.

(Item A8) The working vehicle 1 according to Item A6, wherein a front portion 9b of the battery unit 9 extends upward along the front pillar 3a and is located in front of the front pillar 3a.

With the working vehicle 1 according to Item A8, a gap between the front portion 9b of the battery unit 9 and the cabin 3 can be reduced, and thus, a space in front of the cabin 3 can be effectively used to position the battery unit 9.

(Item A9) The working vehicle 1 according to Item A5, wherein the cabin 3 includes a front glass 16 located in front of the operator's seat 15, and a front portion 9b of the battery unit 9 overlaps the front glass 16 in front view.

With the working vehicle 1 according to Item A9, a large width (width in the vehicle-body width direction) of the battery unit 9 can be ensured. In addition, a portion (portion superposed on or overlaps the front portion 9b) of the front glass 16 can be protected by the front portion 9b of the battery unit 9.

(Item A10) The working vehicle 1 according to Item A5, further including a hood 11 to cover an area above the vehicle body 2 in front of the cabin 3, wherein a front portion 9b of the battery unit 9 is located outward of the hood 11 in a width direction of the hood 11.

With the working vehicle 1 according to Item A10, a space defined in front of the cabin 3 and outward of the hood 11 in the width direction can be effectively used to position the front portion 9b of the battery unit 9.

(Item A11) The working vehicle 1 according to Item A10, wherein an upper end of the front portion 9b is located lower than an upper end of the hood 11.

With the working vehicle 1 according to Item A11, obstruction of the forward visibility of an operator, who gets on the working vehicle 1, by the front portion 9b of the battery unit 9 can be avoided.

(Item A12) The working vehicle 1 according to any one of Items A4 to A11, wherein a step 19 is provided at one of opposite sides of the cabin 3 in a vehicle-body width direction to receive a foot of an operator when the operator enters or exits the cabin 3, and the battery unit 9 is located at the other of the opposite sides in the vehicle-body width direction such that the battery unit overlaps the step 19 in side view.

With the working vehicle 1 according to Item A12, since the battery unit 9 is located on the opposite side of the vehicle body from the step 19 in the vehicle-body width direction, the battery unit 9 can be positioned without being hindered by the step 19. Therefore, the convenience of the operator getting on or off the cabin 3 is not be impaired by the arrangement of the battery unit 9.

(Item A13) The working vehicle 1 according to Item A2 or A3, wherein an upper end of the battery unit 9 is located higher than an upper end of the front wheel 4A and lower than an upper end of the rear wheel 4B.

With the working vehicle 1 according to Item A13, since the upper end of the battery unit 9 is located higher than the upper end of the front wheel 4A, a long length of the battery unit 9 in the vertical direction can be secured. In addition, since the upper end of the battery unit 9 is located lower than the upper end of the rear wheel 4B, the battery unit 9 is not visible when viewed from the rear, and the appearance of the working vehicle 1, when viewed from the rear, is not be impaired by the battery unit 9.

(Item A14) The working vehicle 1 according to any one of Items A2, A3 and A13, further including an operator's seat 15 mounted on the vehicle body 2, wherein the battery unit 9 is located lower than an imaginary straight line SL1 connecting an upper end of the operator's seat 15 and an upper portion of an outer peripheral surface of the front wheel 4A.

With the working vehicle 1 according to Item A14, obstruction of the forward visibility of the operator seated on the operator's seat 15 by the battery unit 9 can be avoided.

(Item A15) The working vehicle 1 according to any one of Items A4 to A12, wherein the cabin 3 includes, at a side portion thereof, a door 17 that is openable and closable, and the battery unit 9 is positioned such that the battery unit does not overlap the door 17 in side view and the lower portion 9a overlaps the door 17 in a front-rear direction.

With the working vehicle 1 according to Item A15, since the battery unit 9 is located at a position not superposed on or overlaps the door 17 in side view, obstruction of the door 17 opening and closing by the battery unit 9 can be avoided. In addition, since the position of the lower portion 9a in the front-rear direction overlaps the door 17, the battery unit 9 can be arranged in a space below the door 17.

(Item A16) The working vehicle 1 according to any one of Items A1 to A15, wherein a lower end of the battery unit 9 is located lower than the vehicle body 2.

With the working vehicle 1 according to Item A16, since the position of the battery unit 9, which is a heavy component, is lowered, the position of the center of gravity of the working vehicle 1 can be lowered, and the stability of the working vehicle 1 during traveling can be improved.

(Item A17) The working vehicle 1 according to any one of Items A5 and A9 to A11, wherein the battery unit 9 includes a battery pack 9A including the battery 9A1, an electric circuit 9C, and a housing 9D to house the battery pack 9A and the electric circuit 9C, and the battery pack 9A is located at the lower portion 9a.

With the working vehicle 1 according to Item A17, the battery pack 9A, which is one of the components of the battery unit 9, is located at the lower portion 9a, so that a wide installation space for the battery pack 9A can be secured, and the capacity of the battery pack 9A can be increased. In addition, the battery pack 9A, which is a heavy component, is located at the lower portion 9a, so that the position of the center of gravity of the working vehicle 1 can be lowered, and the stability of the working vehicle 1 during traveling can be improved.

(Item A18) The working vehicle 1 according to any one of Items A1 to A17, further including a fuel-cell module 8, and a fuel tank 5 to store fuel to be supplied to the fuel-cell module 8, wherein the battery 9A1 is configured to store electric power generated by the fuel-cell module 8.

With the working vehicle 1 according to Item A18, regarding the working vehicle 1 to be driven by the fuel-cell module 8, it is easier to provide installation space for other equipment (e.g., the fuel-cell module 8 and the like) inside the vehicle body 2 in the width direction (e.g., inside the hood 11).

(Item B1) A working vehicle 1 including a vehicle body 2, an electric motor 7 mounted on the vehicle body 2, and a battery unit 9 provided at a first position P1 outside the vehicle body 2 in a width direction of the vehicle body 2 and including a battery to store electric power to be supplied to the electric motor 7, a moving mechanism 40 to enable the battery unit 9 to move from the first position P1 to a second position P2, which is located outward of the first position P1 in a vehicle-body width direction.

With the working vehicle 1 according to Item B1, since the battery unit 9 is located outward of the vehicle body 2 in the width direction of the vehicle body 2, it is easier to provide installation space for other equipment (e.g., a fuel-cell module 8 and the like) inside the vehicle body 2 in the width direction (e.g., inside a hood 11). In addition, since the battery unit 9 can be moved outward in the vehicle-body width direction, the battery unit 9 can be moved to a position away from the vehicle body 2, and a battery replacement operation can be easily performed.

(Item B2) The working vehicle 1 according to Item B1, including a traveling device 4 including a front wheel 4A and a rear wheel 4B, wherein the battery unit 9 is located between the front wheel 4A and the rear wheel 4B in a side view. When the battery unit 9 is in the first position P1, an outer end thereof in the vehicle-body width direction is located inward of an outer end of the rear wheel 4B, and when the battery unit 9 is in the second position P2, the outer end thereof in the vehicle-body width direction is located outward of the outer end of the rear wheel 4B.

With the working vehicle 1 according to Item B2, when the battery unit 9 is in the first position P1, the battery unit 9 does not project outward from the rear wheel 4B, and thus, the width of the working vehicle 1 is not increased by the battery unit 9. In contrast, when the battery unit 9 is in the second position P2, the battery unit 9 projects outward from the rear wheel 4B, and thus, replacement of the battery (battery pack 9A) included in the battery unit 9 can be facilitated.

(Item B3) The working vehicle 1 according to Item B2, wherein, when the battery unit 9 is in the second position P2, an inner end thereof in the vehicle-body width direction is located outward of the outer end of the rear wheel 4B.

With the working vehicle 1 according to Item B3, when the battery unit 9 is in the second position P2, the entire battery unit 9 is located outward of the rear wheel 4B, and thus, replacement of the battery (battery pack 9A) included in the battery unit 9 can be very facilitated.

(Item B4) The working vehicle 1 according to any one of Items B1 to B3, wherein the moving mechanism 40 includes a slide rail 41 including a first member 42 that is fixed to the vehicle body 2 and that extends in the vehicle-body width direction and a second member 43 that is movable in the vehicle-body width direction along the first member 42, and the battery unit 9 is supported by the second member 43 and moves to the first position P1 and to the second position P2 along with movement of the second member 43.

With the working vehicle 1 according to Item B4, since the moving mechanism 40 includes the slide rail 41, a moving direction of the second member 43 with respect to the first member 42 can be determined. Therefore, the second member 43 can be reliably moved outward in the vehicle-body width direction.

(Item B5) The working vehicle 1 according to Item B4, wherein the second member 43 is provided with a support leg 44 that supports the second member 43 on the ground.

With the working vehicle 1 according to Item B5, since the second member 43 can be supported on the ground by the support leg 44, deflection or deformation of the second member 43 due to the weight of the battery unit 9 can be prevented.

(Item B6) The working vehicle 1 according to Item B5, wherein the support leg 44 can change its posture to a first posture in which it extends in a direction along the second member 43 so as not to be in contact with the ground and to a second posture in which it extends downward from the second member 43 so as to be in contact with the ground.

With the working vehicle 1 according to Item B6, by setting the support leg 44 in the first posture, the support leg 44 does not interfere when the battery unit 9 is in the first position P1. In addition, by setting the support leg 44 in the second posture, the slide rail 41 can be prevented from being in a cantilevered state when the battery unit 9 is in the second position P2. Therefore, the slide rail 41 can be prevented from bending downward or deforming due to the weight of the battery unit 9.

(Item B7) The working vehicle 1 according to Item B6, wherein the support leg 44 includes a wheel 45 that is in contact with the ground when the support leg 44 is in the second posture.

With the working vehicle 1 according to Item B7, when the second member 43 is moved with respect to the first member 42 in the vehicle-body width direction, by setting the support leg 44 in the second posture such that the wheel 45 is brought into contact with the ground, the movement of the second member 43 with respect to the first member 42 (i.e., movement of the battery unit 9) can be performed easily and smoothly with a small force.

(Item B8) The working vehicle 1 according to any one of Items B4 to B7, wherein the slide rail 41 includes a front rail 41A that supports a front portion of the battery unit 9 and a rear rail 41B that supports a rear portion of the battery unit 9.

With the working vehicle 1 according to Item B8, since the front and rear portions of the battery unit 9, which is a heavy component, are supported by the slide rails 41, a load to be applied to the slide rails 41 can be reduced, and deformation and the like of the slide rails 41 can be prevented.

(Item B9) The working vehicle 1 according to any one of Items B4 to B8, wherein when the battery unit 9 is in the second position P2, a space S1 is defined between the vehicle body 2 and the battery unit 9, and the operator can stand on the slide rails 41 in the space S1.

With the working vehicle 1 according to Item B9, each of the slide rails 41 can be used as a scaffold for performing an operation on the vehicle body 2 (e.g., loading and unloading of the fuel tank 5 and the like). As a result, the operator can perform such an operation on the vehicle body 2 without being obstructed by the battery unit 9.

(Item B10) The working vehicle 1 according to any one of Items B1 to B9, including an inverter 24 electrically connected to the electric motor 7, and a cable 50 to connect the battery unit 9 and the inverter 24 to each other, wherein the battery unit 9 includes a connector (first connector) 51 to and from which the cable 50 is attachable and detachable. The connector 51 is provided at a position on any one of the front of the battery unit 9, the top of the battery unit 9, or the inside of the battery unit 9 in the vehicle-body width direction, and when the battery unit 9 is at least in the second position P2, the cable 50 can be detached from the connector 51.

With the working vehicle 1 according to Item B10, since the connector (first connector) 51 is provided at a position on any one of the front of the battery unit 9, the top of the battery unit 9, or the inside of the battery unit 9 in the vehicle-body width direction, the cable 50 can be easily attached and detached to and from the connector 51. In addition, since the cable 50 can be detached from the connector 51 when the battery unit 9 is in the second position, the cable 50 can be reliably detached by moving the battery unit 9 from the first position P1 to the second position P2.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3: cabin
- 3a: front pillar
- 3b: rear pillar
- 3c: roof
- 4A: front wheel
- 4B: rear wheel
- 5: fuel tank
- 7: electric motor
- 8: fuel-cell module
- 9: battery unit
- 9a: lower portion
- 9b: front portion
- 9A: battery pack
- 9C: electric circuit
- 9D: housing
- 11: hood
- 14: fender
- 15: operator's seat
- 16: front glass
- 17: door
- 19: step
- SL1: imaginary straight line

## Claims

1. A working vehicle comprising:
a vehicle body,
an electric motor in or on the vehicle body, and
a battery unit including a battery to store electric power to be supplied to the electric motor, wherein
the battery unit is located outward of the vehicle body in a width direction of the vehicle body.

2. The working vehicle according to claim 1, further comprising:
a traveling device including a front wheel and a rear wheel, wherein
the battery unit is located between the front wheel and the rear wheel in side view.

3. The working vehicle according to claim 2, wherein
in a vehicle-body width direction, an outer end of the battery unit is located outward of an outer end of the front wheel and inward of an outer end of the rear wheel.

4. The working vehicle according to claim 1, further comprising:
an operator's seat mounted on the vehicle body, and
a cabin provided around the operator's seat, wherein
the battery unit includes a lower portion located below the cabin.

5. The working vehicle according to claim 4, wherein
the battery unit includes a front portion located in front of the cabin.

6. The working vehicle according to claim 4, wherein
the cabin includes a front pillar located forward of the operator's seat, a rear pillar located rearward of the operator's seat, and a roof located higher than the operator's seat, and
the battery unit overlaps the front pillar in a front-rear direction.

7. The working vehicle according to claim 4, further comprising:
a fender provided above the rear wheel, wherein
a lower portion of the battery unit overlaps the fender in a front-rear direction.

8. The working vehicle according to claim 6, wherein
a front portion of the battery unit extends upward along the front pillar and is located in front of the front pillar.

9. The working vehicle according to claim 5, wherein
the cabin includes a front glass located in front of the operator's seat, and
a front portion of the battery unit overlaps the front glass in front view.

10. The working vehicle according to claim 5, further comprising:
a hood to cover an area above the vehicle body in front of the cabin, wherein
a front portion of the battery unit is located outward of the hood in a width direction of the hood.

11. The working vehicle according to claim 10, wherein
an upper end of the front portion is located lower than an upper end of the hood.

12. The working vehicle according to claim 4, wherein
a step is provided at one of opposite sides of the cabin in a vehicle-body width direction to receive a foot of an operator when the operator enters or exits the cabin, and
the battery unit is located at the other of the opposite sides in the vehicle-body width direction such that the battery unit overlaps the step in side view.

13. The working vehicle according to claim 2, wherein
an upper end of the battery unit is located higher than an upper end of the front wheel and lower than an upper end of the rear wheel.

14. The working vehicle according to claim 2, further comprising:
an operator's seat mounted on the vehicle body, wherein
the battery unit is located lower than an imaginary straight line connecting an upper end of the operator's seat and an upper portion of an outer peripheral surface of the front wheel.

15. The working vehicle according to claim 4, wherein
the cabin includes, at a side portion thereof, a door that is openable and closable, and
the battery unit is positioned such that the battery unit does not overlap the door in side view and the lower portion overlaps the door in a front-rear direction.

16. The working vehicle according to claim 1, wherein
a lower end of the battery unit is located lower than the vehicle body.

17. The working vehicle according to claim 5, wherein
the battery unit includes a battery pack including the battery, an electric circuit, and a housing to house the battery pack and the electric circuit, and
the battery pack is located at the lower portion.

18. The working vehicle according to any one of claims 1 to 17, further comprising:
a fuel-cell module, and
a fuel tank to store fuel to be supplied to the fuel-cell module, wherein
the battery is configured to store electric power generated by the fuel-cell module.
